# EUROPÄISCHE PATENTANMELDUNG

(11) **EP 0 588 035 A2**
(43) Veröffentlichungstag der Anmeldung: **23.03.1994**
(21) Anmeldenummer: 93112130.5
(22) Anmeldetag: 29.07.1993
(51) Int. Cl.: E03F 5/16

(54) **Abscheider für mit Öl und Fetten verunreinigte Abwässer**

(30) Priorität: 20.08.1992 DE 9211158 U
(71) Anmelder: PASSAVANT-WERKE AG, D-65322 Aarbergen 7 (DE)
(72) Erfinder: Bachon, Ulrich, Dipl.-Ing., D-65582 Diez (DE); Helffenstein, Kurt, D-65558 Flacht (DE); Recktenwald, Werner, D-65582 Diez (DE)

(57) **Zusammenfassung**

Abscheider, die von mit Fetten und Ölen verunreinigten Abwässern beaufschlagt werden, sind von einem Zulauf zu einem gegenüberliegenden Auslauf durchströmte Beruhigungsbecken. Um ihre Funktion durch mit dem Zulauf herangeführte grobe Gegenstände nicht zu stören, wird vorgeschlagen, im Zulauf ein Grobsieb anzuordnen, das durch eine obere Wartungsöffnung herausnehmbar ist und vorzugsweise die Form eines schräg liegenden Halbzylinders mit Siebstäben hat. Der Zulauf ist an dieser Stelle gehäuseartig vergrößert.

## Beschreibung

Die Neuerung befaßt sich mit Abscheidern für mit Ölen und Fetten verunreinigte Abwässer, wie sie in gewerblichen Küchen von Hotels, Restaurants, Kantinen und Mensen anfallen.

Die dort installierten Geschirrspülmaschinen und Spülbecken entwässern in den Abscheider, der die Speiseöle und -fette zurückhält.

Gelegentlich können mit diesem Abwasser auch Besteckteile in den Abscheider gelangen, sei es beim Entleeren der Besteckkörbe oder infolge Entfernen des Siebs im Spülbecken. Die Besteckteile verursachen in den Abscheidern, die in der überwiegenden Zahl der Einbaufälle mit einer Spül- und Entleereinrichtung mit Umwälzpumpe ausgerüstet sind, große Schäden, vor allem an der Pumpe.

Teure Reperaturen sind dann erforderlich. Bei neueren Abscheidern, die ohne Freispiegel und mit einem langsam umlaufenden Krählwerk arbeiten, können die Besteckteile das Krählwerk blockieren.

Aufgabe der Neuerung ist es daher zu verhindern, daß Besteckteile bis in die Abscheider gelangen können. Diese Aufgabe wird gelöst durch ein im Zulauf des Abscheiders angeordnetes Grobsieb, das durch eine obere Wartungsöffnung zugänglich und herausnehmbar ist. Dieses Grobsieb hält die mitgeschwemmten Besteckteile zurück. Sie können durch die Wartungsöffnung entnommen werden.

Vorzugsweise ist der Deckel der Wartungsöffnung durchsichtig. Dann kann jederzeit beobachtet werden, ob sich ein Besteckteil in dem Grobsieb befindet.

Für die Form des Grobsiebs wird ein halber Hohlzylindervorgeschlagen, der an der Eintrittsseite offen und an der gegenüberliegenden Seite durch eine Lochwand geschlossen ist. Wenn das Sieb, das auch ganz grobe Schwemmstoffe zurückhält, verstopft ist, wirkt die Oberkante der Lochwand als Notüberlauf.

Weitere konstruktive Details sind den Unteransprüchen und der nachfolgenden Beschreibung eines konkreten Ausführungsbeispiels zu entnehmen. Es zeigen
Fig. 1 einen Längsschnitt durch das an einen Fettabscheider 1 angeschlossene Einlaufgehäuse
Fig. 2 die Draufsicht auf das Gehäuse Nach Fig. 1,
Fig. 3 eine Stirnansicht des Grobsiebs

Von dem Fettabscheider 1 ist nur der Einlaufstutzen 2, die gegenüberliegende Leitwand 3 und die durch einen Domdeckel 4 verschlossene Revisionsöffnung 5 dargestellt. An den Einlaufstutzen 2 ist das Siebgehäuse 6 mittels muffenloser Spannschellen 7 angeschlossen. Das Siebgehäuse 6 besitzt oben einen die Wartungsöffnung 8 verschließenden Deckel 9, der mittels Flügelmuttern 10 und Stiftschrauben 11 befestigt wird.

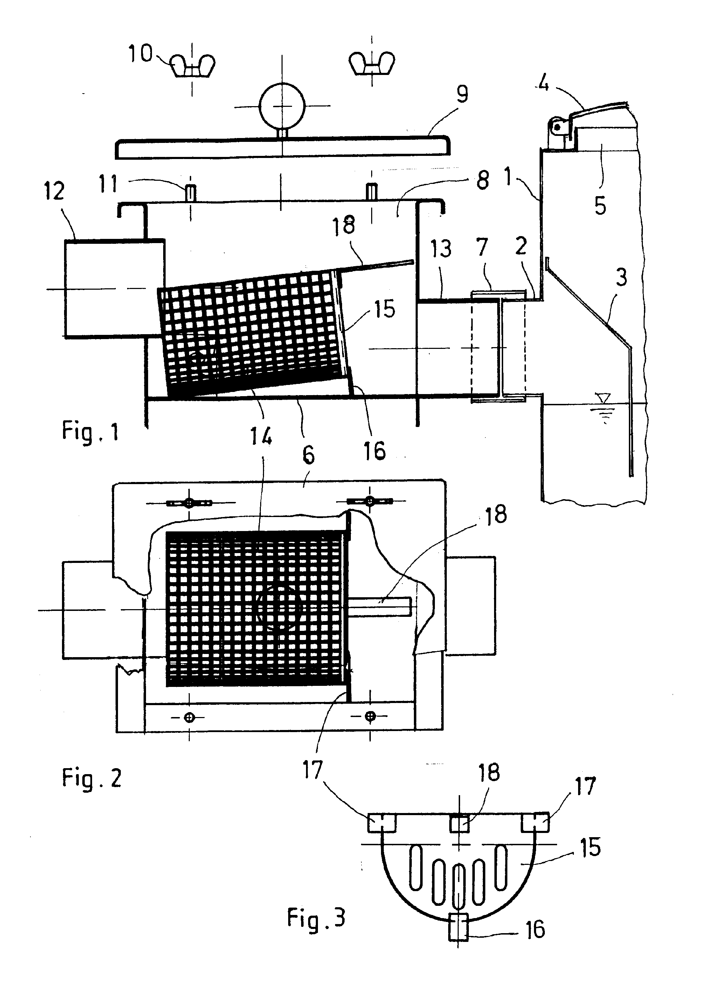

Der einlaufseitige Rohrstutzen 12 liegt höher als der Auslaufstutzen 13, so daß sich eine Stufe ergibt, unter die das halbzylindrisch ausgebildete Grobsieb 14 geschoben werden kann. Die gegenüberliegende Stirnseite des Grobsiebs ist gemäß Fig. 3 durch eine Lochwand 15 geschlossen. Ein Fuß 16 und insgesamt drei seitliche und hintere Distanzlaschen 17, 18 sichern die zum Auslauf schräg ansteigende Stellung des Grobsiebs 14. Die lange Distanzlasche 18 kann auch als Griff verwendet werden.

Im Betrieb durchläuft das Abwasser das Grobsieb unter Zurücklassung grober Schmutzstoffe. Durch den durchsichtigen Deckel 9 kann beobachtet werden, wann das Grobsieb entnommen und gereinigt werden muß. Wird die Reinigung lange unterlassen und verstopft sich das Grobsieb vollständig, dann kann weiter zulaufendes Abwasser über die Oberkante der Lochwand 15 ablaufen.

Vom Abwasser mitgeschwemmte Besteckteile werden vom Grobsieb ebenfalls zurückgehalten und können dort wieder entnommen werden.

Das Siebgehäuse hat vorzugsweise dieselbe Form wie das in den Auslauf des Fettabscheiders eingesetzte Probenahmegehäuse. Hierfür ist also kein anderes Gehäuse notwendig.

## Patentansprüche

1. Abscheider für mit Ölen und Fetten verunreinigte Abwässer, bestehend aus einem vom Abwasser beruhigt durchflossenen Abscheidebecken mit oberem Zulauf und von einer Tauchwand abgeschirmtem, gegen- überliegendem Klarwasserablauf, gekennzeichnet durch ein im Zulauf (2) angeordnetes Grobsieb (14), das durch eine obere Wartungsöffnung (8) zugänglich und herausnehmbar ist.

2. Abscheider nach Anspruch 1, dadurch gekennzeichnet, daß die Wartungsöffnung (8) durch einen durchsichtigen Deckel (9) verschlossen ist.

3. Abscheider nach Anspruch 1 oder 2, dadurch gekennzeichnet, daß das Grobsieb (14) die Form eines liegenden hohlen Halbzylinders hat, der durch die eine offene Stirnseite angeströmt wird.

4. Abscheider nach Anspruch 3, dadurch gekennzeichnet, daß die gegenüberliegende Stirnseite bis zur Zylinderachse durch eine Stirnwand (15) geschlossen ist.

5. Abscheider nach Anspruch 4, dadurch gekennzeichnet, daß die Stirnwand (15) Durchflußöffnungen von der Größe kleiner als die Besteckteile aufweist.

6. Abscheider nach Anspruch 5, dadurch gekennzeichnet, daß die Oberkante der Stirnwand (15) als Notüberlauf ausgebildet ist.

7. Abscheider nach Anspruch 1 bis 6, dadurch gekennzeichnet, daß das Grobsieb (14) schräg ansteigend in einer gehäuseartigen Erweiterung (6) des Zulaufs (2) angeordnet ist.

8. Abscheider nach Anspruch 7, gekennzeichnet durch einen Fuß (16) an der Austrittsseite des Grobsiebs (14), der die Schrägstellung des Grobsiebs bewirkt.

9. Abscheider nach Anspruch 7 oder 8, gekennzeichnet durch ein von der Austrittsseite des Grobsiebs (14) bis zur gegenüberliegenden Wand des Gehäuses (6) erstrecktes Distanzstück (18), das das Grobsieb eintrittsseitig festlegt.

10. Abscheider nach Anspruch 1 bis 9, dadurch gekennzeichnet, daß der Zulaufstutzen (12) in das Gehäuse (6) verlängert ist und etwa konzentrisch in die offene Stirnseite des Grobsiebs (14) mündet.
